# EUROPÄISCHE PATENTSCHRIFT

(11) **EP 2 191 545 B1**
(45) Veröffentlichungstag und Bekanntmachung des Hinweises auf die Patenterteilung: **28.03.2012**
(21) Anmeldenummer: 08775273.9
(22) Anmeldetag: 22.07.2008
(51) Int. Cl.: H01S 3/06, F02P 23/04, H01S 3/113

(54) **VERFAHREN ZUR HERSTELLUNG EINES FESTKÖRPER-LASERS MIT PASSIVER GÜTESCHALTUNG**
METHOD FOR THE PRODUCTION OF A PASSIVELY Q-SWITCHED SOLID STATE LASER
PROCÉDÉ DE RÉALISATION D'UN LASER À CORPS SOLIDE À DÉCLENCHEMENT PASSIF

(30) Priorität: 14.09.2007 DE 102007044007
(43) Veröffentlichungstag der Anmeldung: 02.06.2010
(73) Patentinhaber: Robert Bosch GmbH, 70442 Stuttgart (DE)
(72) Erfinder: HERDEN, Werner, 70839 Gerlingen (DE); RIDDERBUSCH, Heiko, 71701 Schwieberdingen (DE)
(86) Internationale Anmeldenummer: PCT/EP2008/059600
(87) Internationale Veröffentlichungsnummer: WO 2009/037035

(56) Entgegenhaltungen:
- WO-A-90/09688
- DE-A1-102006 024 678
- US-A- 5 953 620
- US-A- 6 107 163
- US-A1- 2004 066 805
- "AWS1 Abrasive Wire Saw", , 29 October 2002 (2002-10-29), Retrieved from the Internet: URL:http://www.lochitech.uk.com/aws1.asp [retrieved on 2011-12-05]
- J F Meng et al: "Research on endless wire saw cuting of Al2O3/TiC Ceramics", Key engineering materials , vol. 315 15 July 2006 (2006-07-15), Retrieved from the Internet: URL:http://www.scientific.net/KEM.315-316. 571 [retrieved on 2011-12-05]

## Beschreibung

### Stand der Technik

Die Erfindung betrifft einen Festkörper-Laser, insbesondere zum Einsatz in einer Lasereinrichtung einer sogenannten Laserzündung für Brennkraftmaschinen.

Bei diesen Laserzündungen wird die Zündkerze durch einen Zündlaser ersetzt, der einen fokussierten Laserimpuls in den Brennraum der Brennkraftmaschine emittieren kann. In dem Fokus dieses Laserstrahls, dem sogenannten Zündpunkt, ist eine so große Energiedichte vorhanden, dass sich das dort befindliche Brenngas-Luft-Gemisch entzündet.

Da Brennkraftmaschinen für Kraftfahrzeuge in sehr großen Stückzahlen hergestellt werden, ist die wirtschaftliche Herstellung dieser Laserzündungen von großer Bedeutung. Aus der US 2004/0066805 ist ein Verfahren zur Herstellung von Festkörperlasern, aus der US 6107163 ein Trenn verfahren für Halbleiterchip mit einer Drahtsäge bekannt.

### Offenbarung der Erfindung

Der Erfindung liegt die Aufgabe zugrunde, ein Verfahren zum Herstellen eines Festkörper-Lasers mit passiver Güteschaltung bereitzustellen, das die wirtschaftliche Fertigung größerer Stückzahlen von Festkörper-Lasern erlaubt.

Diese Aufgabe wird erfindungsgemäß gelöst bei einem Verfahren, bei welchem eine planparallele erste Waferplatte aus einem laseraktiven Material hergestellt wird, die anschließend eine zweite planparallele Waferplatte aus einem Material, das als passiver Güteschalter geeignet ist, hergestellt wird, die erste Waferpatte und die zweite Waferplatte zu einem Waferblock gebondet werden. Dieser Waferblock kann dann auf beiden Stirnflächen mit einem Resonatorspiegel beschichtet werden. Anschließend wird dieser Waferblock in mehrere passiv gütegeschaltete Festkörper-Laser mittels einer Drahtsäge, die einen "endlosen" Draht umfasst, getrennt.

Vorteilhaft an dem erfindungsgemäßen Verfahren ist, dass die Festkörper-Laser und die passiven Gütteschalter nicht einzeln gebondet beziehungsweise verbunden werden, sondern jeweils eine erste Waferplatte und eine zweite Waferplatte. Aus diesem daraus gebildeten Waferblock kann nun eine Vielzahl von laseraktiven Festkörpern mit passivem Güteschalter herausgesägt werden, so dass sich schon aufgrund der deutlichen Verringerung der Zahl der Bonding-Vorgänge eine erhebliche Steigerung der Wirtschaftlichkeit ergibt.

Des Weiteren ist vorgesehen, den Waferblock in eine Vielzahl von laseraktiven Festkörpern mit passivem Güteschalter zu trennen, indem eine Drahtsäge eingesetzt wird. Eine solche Drahtsäge umfasst erfindungsgemäß einen "endlosen" Draht oder ein "endloses" Drahtseil, dass über Rollen geführt und angetrieben wird. Mit Hilfe des Drahts beziehungsweise des Drahtseils wird der erforderliche Trennvorgang ausgeführt.

Um die Trennwirkung des Drahts beziehungsweise des Drahtseils zu erhöhen, kann das Drahtseil mit Diamantpulver oder kleinen Splittern von Industriediamanten besetzt sein. Alternativ ist es auch möglich, den Draht, bevor er an die Schnittstelle gelangt, durch eine Slurry zu leiten, wobei in der Slurry Schleif- beziehungsweise Schneidmittel, wie Silizium-Carbid und/oder Diamantsplitter vorhanden sind. Diese Slurry haftet an dem Draht beziehungsweise an dem Drahtseil und gelangt dadurch in den Schneidspalt. Dort tragen die in der Slurry enthaltenen Schneidmittel zum effektiven und schnellen Trennen des Waferblocks in eine Vielzahl von laseraktiven Festkörpern mit passiven Güteschaltern bei.

Um eine möglichst hochwertige Verbindung zwischen erster Waferplatte und zweiter Waferplatte zu erreichen, werden die Kontaktflächen von erster Waferplatte und zweiter Waferplatte vor dem Bonden von allen Verunreinigungen gereinigt. Dies kann vorzugsweise mit einer Mischung aus Schwefelsäure und Wasserstoffperoxid durchgeführt werden.

Anschließend können die Kontaktflächen von erster Waferplatte und zweiter Waferplatte vor dem Bonden geätzt werden und danach zum Beispiel mit verdünnter Schwefelsäure mit einem PH-Wert von 1 hydrophil gemacht werden. Die Kontaktflächen können zum Beispiel durch ein plasmaunterstütztes Trockenätzverfahren (Plasmaätzen) gereinigt werden.

Bei Bedarf werden zwischen den verschiedenen Reinigungsschritten mindestens die Kontaktflächen von erster Waferptatte und zweiter Waferplatte vor dem Bonden mindestens einmal mit ultra-reinem Wasser gespült.

Alle Vorgänge können bei Bedarf zur Intensivierung der Reinigung beziehungsweise des Ätzens bei erhöhter Temperatur durchgeführt werden.

Das Bonden an sich erfolgt in dem erste Waferplatte und zweite Waferplatte unter leichtem Druck gegeneinander gepresst werden und dann bei Temperaturen von beispielsweise 1100°C eine Zeitlang erwärmt werden. Dadurch findet eine Diffusion der Moleküle der ersten Waferplatte und der zweiten Waferplatte statt und es ergibt sich eine innige Verbindung beider Waferplatten, ohne dass sich eine optische Grenzschicht zwischen erster Waferplatte und zweiter Waferplatte ausbildet. Das Bonden kann bis zu 48 Stunden dauern.

Eine weitere Steigerung der Wirtschaftlichkeit des erfindungsgemäßen Verfahrens kann erreicht werden, wenn gleichzeitig mehrere Drahtsägen nebeneinander angeordnet werden, so dass durch zwei Schnitte, nämlich einen Schnitt in Richtung einer X-Achse und einen zweiten Schnitt in Richtung einer Y-Achse ein Waferblock in eine Vielzahl von laseraktiven Festkörpern mit passiver Güteschaltung getrennt beziehungsweise zerlegt werden kann.

Die Wirtschaftlichkeit des Trennvorgangs kann weiter erhöht werden, wenn mehrere Waferblöcke übereinander gestapelt werden und dieser Stapel mit einer oder mehreren Drahtsägen zerteilt werden. Um die zuvor aufgedampften Spiegelschichten zu schützen, empfiehlt es sich weiter, die Stirnflächen der Waferblöcke durch eine Schutzschicht, wie zum Beispiel eine selbstklebende Schutzfolie, vor allem gegen mechanische Beschädigungen zu schützen. Außerdem bewirkt die Schutzfolie einen Zusammenhalt der teilweise zersägten Waferblöcke, was die Handhabung deutlich erleichtert.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen und offenbarten Merkmale können sowohl einzeln als auch in beliebiger Kombination miteinander erfindungswesentlich sein.

### Kurze Beschreibung der Zeichnungen

In der Zeichnung zeigt:
- Figur 1a: eine schematische Darstellung einer Brennkrafhnaschine mit einer laserbasierten Zündeinrichtung;
- Figur 1b: eine schematische Darstellung der Zündeinrichtung aus Figur 1;
- Figur 2: ein nach dem erfindungsgemäßen Verfahren hergestellter laseraktiver Festkörper 44 mit einer passiven Güteschaltung 46 und
- Figuren 3 bis 5: verschiedene Bearbeitungsstadien des erfindungsgemäßen Verfahrens

### Ausführungsformen der Erfindung

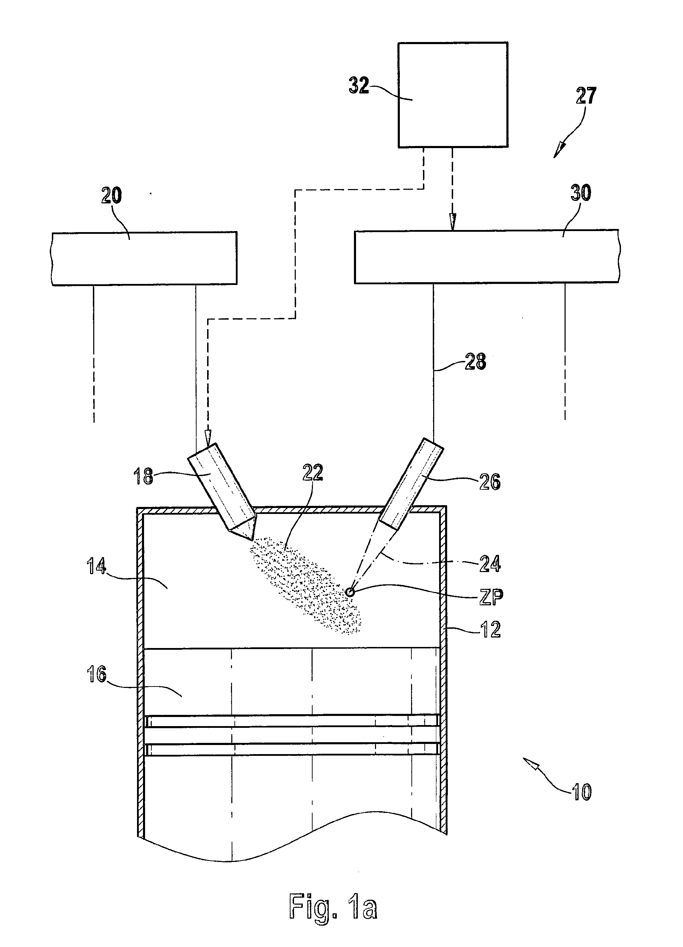

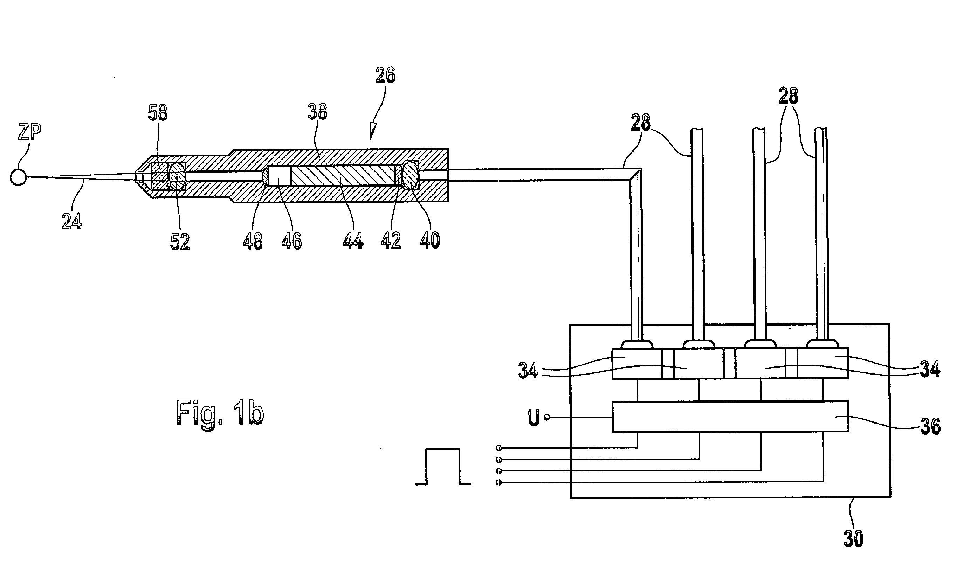

Eine Brennkraftmaschine trägt in Figur 1 a insgesamt das Bezugszeichen 10. Sie kann zum Antrieb eines nicht dargestellten Kraftfahrzeugs dienen; alternativ kann die Brennkraftmaschine 10 natürlich auch stationär eingesetzt werden. Die Brennkramnaschine 10 umfasst mehrere Zylinder, von denen in Figur 1 nur einer mit dem Bezugszeichen 12 bezeichnet ist. Ein Brennraum 14 des Zylinders 12 wird von einem Kolben 16 begrenzt. Kraftstoff gelangt in den Brennraum 14 direkt durch einen Injektor 18, der an einen auch als Rail bezeichneten Kraftstoff-Druckspeicher 20 angeschlossen ist.

In den Brennraum 14 eingespritzter Kraftstoff 22 wird mittels eines Laserimpulses 24 entzündet, der von einer einen Zündlaser 26 umfassenden Zündeinrichtung 27 in den Brennraum 14 abgestrahlt wird. Hierzu wird der Zündlaser 26 über eine Lichtleitereinrichtung 28 mit einem Pumplicht gespeist, welches von einer Pumplichtquelle 30 bereitgestellt wird. Die Pumplichtquelle 30 wird von einem Steuergerät 32 gesteuert, das auch den Injektor 18 ansteuert.

Wie aus Figur 1b hervorgeht, speist die Pumplichtquelle 30 mehrere Lichtleitereinrichtungen 28 für verschiedene Zündlaser 26, die jeweils einem Zylinder 12 der Brennkraftmaschine 10 zugeordnet sind. Hierzu weist die Pumplichtquelle 30 mehrere einzelne Laserlichtquellen 34 auf, die mit einer Pulsstromversorgung 36 verbunden sind. Durch das Vorhandensein der mehreren einzelnen Laserlichtquellen 340 ist gleichsam eine "ruhende" Verteilung von Pumplicht an die verschiedenen Zündlaser 26 realisiert, so dass keine optischen Verteiler oder dergleichen zwischen der Pumplichtquelle 30 und den Zündlasern 26 erforderlich sind.

Der Zündlaser 26 weist beispielsweise einen laseraktiven Festkörper 44 mit einer passiven Güteschattung 46 auf, die zusammen mit einem Einkoppelspiegel 42 und einem Auskoppeispiegel 48 einen optischen Resonator bildet. Unter Beaufschlagung mit von der Pumplichtquelle 30 erzeugtem Pumplicht erzeugt der Zündlaser 26 in an sich bekannter Weise einen Laserimpuls 24, der durch eine Fokussieroptik 52 auf einen in dem Brennraum 14 (Figur 1a) befindilchen Zündpunkt ZP fokussiert ist. Die in dem Gehäuse 38 des Zündlasers 26 vorhandenen Komponenten sind durch ein Brennraumfenster 58 von dem Brennraum 14 getrennt.

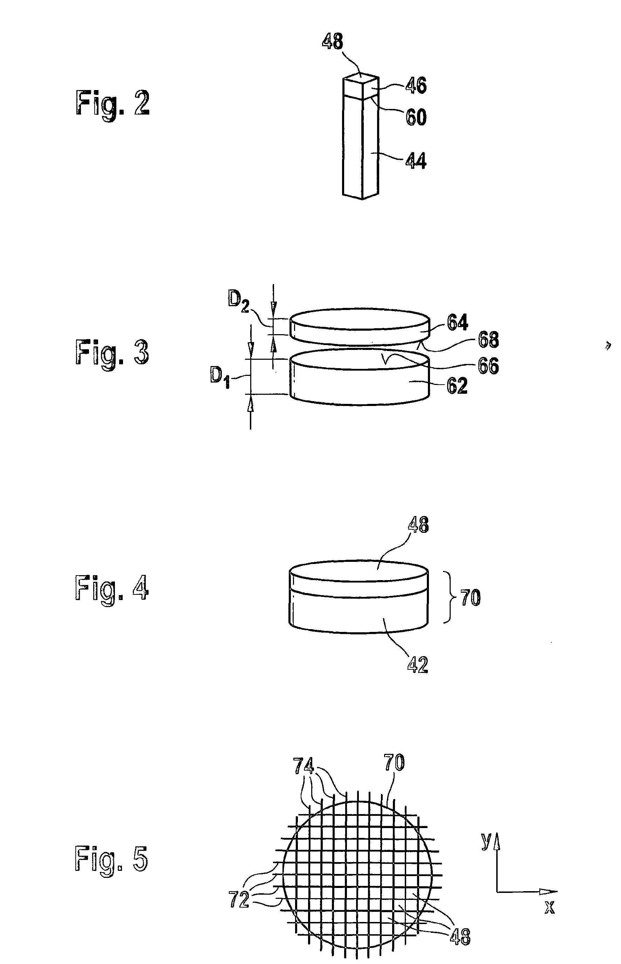

In Figur 2 ist ein laseraktiver Festkörper 44 mit passiver Güteschaltung 46, der nach dem erfindungsgemäßen Verfahren hergestellt worden ist, isometrisch dargestellt. In Figur 2 ist der Einkoppelspiegel 42 (siehe Figur 1b) nicht sichtbar. Die Grenze zwischen laseraktivem Festkörper 44 und passiver Güteschaltung 46 ist durch eine Linie 60 angedeutet. Die durch die Linie 60 angedeutete Grenzfläche soll hinsichtlich ihrer optischen Eigenschaften die Emission des Laserimpulses durch den Auskoppelspiegel 48 der passiven Güteschaltung 46 möglichst wenig beeinträchtigen.

In Figur 3 sind eine erste Waferplatte 62 und eine zweite Waferplatte 64 in einer Seitenansicht dargestellt. Die erste Waferplatte 62 besteht aus einem laseraktiven Material, während aus der zweiten Waferplatte 64 die passive Güteschaltung 46 (siehe Figur 2) gebildet wird. Die Kontaktflächen von erster Waferplatte 62 und zweiter Waferplatte 64 sind mit den Bezugzeichen 66 und 68 bezeichnet.

An den Kontaktflächen 66 und 68 werden die erste Waferplatte 62 und die zweite Waferplatte 64 miteinander gebondet. Dazu ist es erforderlich, dass diese Kontaktflächen 66 und 68 erstens sehr eben sind und frei von jeglichen Verunreinigungen. Dies wird durch verschiedene Reinigungsschritte, Ätzen und ein Hydrophilieren erreicht, wie es im Zusammenhang mit den Patentansprüchen 2 ff in der Beschreibungseinleitung bereits ausführlich erläutert wurde.

Wenn die Kontaktflächen 66 und 68 entsprechend vorbereitet wurden, werden erste Waferplatte 62 und zweite Waferplatte 64 aufeinander gelegt und gegeneinander gepresst. Durch eine anschließende Wärmebehandlung, bei beispielsweise 1100° C, die bis zu fünfzig Stunden dauern kann, verbinden sich erste Waferplatte 62 und zweite Waferplatte 64 an ihren Kontaktflächen 66 und 68 durch Diffusion. Der dadurch entstehende Waferblock ist in Figur 4 mit dem Bezugszeichen 70 versehen.

Anschließend werden die Stirnflächen des Waferblocks 70 mit einem Einkoppelspiegel 42 und einem Auskoppelspiegel 48 beschichtet. Dadurch, dass der Waferblock 70 vor dem Zerteilen in verschiedene laseraktive Festkörper 44 beschichtet wird, ergibt sich eine erhebliche Produktivitätssteigerung.

In Figur 5 ist ein nach dem erfindungsgemäßen Verfahren hergestellter Waferblock 70 in einer Ansicht von oben dargestellt. Gleichzeitig sind Schnittlinien 72 und 74 eingezeichnet. Die parallel zur X-Achse verlaufenden Schnittlinien sind teilweise mit den Bezugszeichen 72 versehen, während die in Richtung der Y-Achse verlaufende Schnittlinien teilweise mit den Bezugszeichen 74 versehen wurden.

Um nun den Waferblock 70 möglichst wirtschaftlich in eine Vielzahl von laseraktiven Festkörpern 44 mit gebondeter passiver Güteschaltung 46 aufzutrennen, wird der Waferblock 70 durch mehrere parallel zueinander angeordnete Drahtsägen (nicht dargestellt) mit einem ersten Schnitt in Richtung der X-Achse in mehrere Streifen zerteilt. Anschließend werden diese Streifen durch einen zweiten Schnitt mit mehreren parallel zueinander angeordneten Drahtsägen in Richtung der Y-Achse in die in Figur 2 dargestellten laseraktiven Festkörper 44 mit gebondeter passiver Güteschaltung 46 zerlegt.

Das Drahtsägen hat sich sowohl mit einer Drahtsäge als auch mit mehreren parallel zueinander angeordneten Drahtsägen als außerordentlich wirtschaftlich erwiesen. Im Ergebnis werden durch das erfindungsgemäße Verfahren eine erhebliche Steigerung der Produktivität und damit eine erhebliche Reduktion der Herstellungskosten erreicht.

## Patentansprüche

1. Verfahren zur Herstellung eines passiv güte geschalteten Festkörper-Lasers **gekennzeichnet durch** folgende Verfahrensschritte:
Herstellen einer planparallelen ersten Waferplatte (62) aus einem laseraktiven Material,
Herstellen einer planparallelen zweiten Waferplatte (64) aus einem Material, das als passiver Güteschalter geeignet ist,
Bonden von erster Waferplatte (62) und zweiter Waferplatte (64) zu einem Waferblock (70),
und
Trennen des Waferblocks (70) in mehrere passiv gütegeschaltete Festkörper-Laser (44, 46) mittels einer Drahtsäge, die einen "endlosen" Draht oder ein "endlose" Drahtseil, dass über Rollen geführt und angetrieben wird, umfasst.

2. Verfahren nach Anspruch 1, **dadurch gekennzeichnet, dass** die Kontaktflächen (66, 68) von erster Waferplatte (62) und zweiter Waferplatte (64) vor dem Bonden, insbesondere mit einer Mischung aus Schwefelsäure (H₂SO₄) und Wasserstoffperoxid (H₂O₂), gereinigt werden.

3. Verfahren nach Anspruch 1 oder 2, **dadurch gekennzeichnet, dass** die Kontaktflächen (66, 68) von erster Waferplatte (62) und zweiter Waferplatte (64) vor dem Bonden geätzt werden.

4. Verfahren nach einem der Ansprüche 1 bis 3, **dadurch gekennzeichnet, dass** die Kontaktflächen (66, 68) von erster Waferplatte (62) und zweiter Waferplatte (64) vor dem Bonden mit verdünnter Schwefelsäure (H₂SO₄), insbesondere mit einem PH-Wert von 1, behandelt werden, insbesondere hydrophil gemacht werden.

5. Verfahren nach einem der Ansprüche 2 bis 4, **dadurch gekennzeichnet, dass** die Kontaktflächen (66, 68) von erster Waferplatte (62) und zweiter Waferplatte (64) vor dem Bonden mindestens einmal mit ultra-reinem Wasser gespült werden.

6. Verfahren nach einem der vorhergehenden Ansprüche, **dadurch gekennzeichnet**, (dass eine erste Stirnseite des Waferblocks (70) mit einem Einkoppelspiegel (42) beschichtet wird.

7. Verfahren nach einem der vorhergehenden Ansprüche, **dadurch gekennzeichnet, dass** eine zweite Stirnseite des Waferblocks (70) mit einem Auskoppelspiegel (48) beschichtet wird.

8. Verfahren nach einem der vorhergehenden Ansprüche, **dadurch gekennzeichnet, dass** mehrere gebondete Waferblöcke (70) übereinander gestapelt werden und diese Waferblöcke (70) anschließend in mehrere Festkörper-Laser (44, 46) getrennt werden.

9. Verfahren nach Anspruch 8, **dadurch gekennzeichnet, dass** die erste und/oder die zweite Stirnseite der Waferblöcke (70) vor dem Aufeinanderstapeln durch eine Schutzschicht, insbesondere eine selbstklebende Folie, geschützt werden.

10. Verfahren nach einem der vorhergehenden Ansprüche, **dadurch gekennzeichnet, dass** der Waferblock (70) oder die übereinander gestapelten Waferblöcke (70) durch mehrere parallel zueinander angeordnete Drahtsägen getrennt werden.

11. Verfahren nach einem der vorhergehenden Ansprüche, **dadurch gekennzeichnet, dass** die Sägedrähte der Drahtsägen mit Diamant, insbesondere Diamantpulver, als Schneidmittel arbeiten.

12. Verfahren nach einem der vorhergehenden Ansprüche, **dadurch gekennzeichnet, dass** die Sägedrähte der Drahtsägen mit Silizium-Carbid als Schneidmittel arbeiten.

13. Verfahren nach einem der Ansprüche 11 oder 12, **dadurch gekennzeichnet, dass** die Sägedrähte der Drahtsägen vor dem Schnitt durch eine Slurry gezogen werden, und dass die Slurry das Schneidmittel, bevorzugt in Pulverform, enthält.

14. Verfahren nach einem der Ansprüche 10 oder 11, **dadurch gekennzeichnet, dass** die Sägedrähte der Drahtsägen mit dem Schneidmittel beschichtet sind.

## Claims

1. Method for producing a passively Q-switched solid-state laser, **characterized by** the following method steps:
producing a plane-parallel first wafer plate (62) composed of a laser-active material,
producing a plane-parallel second wafer plate (64) composed of a material suitable as a passive Q-switch,
bonding first wafer plate (62) and second wafer plate (64) to form a wafer block (70),
and
separating the wafer block (70) into a plurality of passively Q-switched solid-state lasers (44, 46) by means of a wire saw comprising an "endless" wire or an "endless" wire cable that is guided and driven by means of rollers.

2. Method according to Claim 1, **characterized in that** the contact areas (66, 68) of first wafer plate (62) and second wafer plate (64) are cleaned prior to bonding, in particular using a mixture of sulphuric acid (H₂SO₄) and hydrogen peroxide (H₂O₂).

3. Method according to Claim 1 or 2, **characterized in that** the contact areas (66, 68) of first wafer plate (62) and second wafer plate (64) are etched prior to bonding.

4. Method according to any of Claims 1 to 3, **characterized in that** the contact areas (66, 68) of first wafer plate (62) and second wafer plate (64) are treated, in particular made hydrophilic, using dilute sulphuric acid (H₂SO₄), in particular having a pH value of 1, prior to bonding.

5. Method according to any of Claims 2 to 4, **characterized in that** the contact areas (66, 68) of first wafer plate (62) and second wafer plate (64) are rinsed at least once with ultra-pure water prior to bonding.

6. Method according to any of the preceding claims, **characterized in that** a first end side of the wafer block (70) is coated with a coupling-in mirror (42).

7. Method according to any of the preceding claims, **characterized in that** a second end side of the wafer block (70) is coated with a coupling-out mirror (48).

8. Method according to any of the preceding claims, **characterized in that** a plurality of bonded wafer blocks (70) are stacked one above another and said wafer blocks (70) are subsequently separated into a plurality of solid-state lasers (44, 46).

9. Method according to Claim 8, **characterized in that** the first and/or the second end side of the wafer blocks (70) are/is protected by a protective layer, in particular a self-adhesive film, before being stacked one on top of another.

10. Method according to any of the preceding claims, **characterized in that** the wafer block (70) or the wafer blocks (70) stacked one above another is/are separated by a plurality of wire saws arranged parallel to one another.

11. Method according to any of the preceding claims, **characterized in that** the sawing wires of the wire saws operate using diamond, in particular diamond powder, as cutting means.

12. Method according to any of the preceding claims, **characterized in that** the sawing wires of the wire saws operate using silicon carbide as cutting means.

13. Method according to either of Claims 11 and 12, **characterized in that** the sawing wires of the wire saws are drawn through a slurry prior to cutting, and **in that** the slurry contains the cutting means, preferably in powder form.

14. Method according to either of Claims 10 and 11, **characterized in that** the sawing wires of the wire saws are coated with the cutting means.

## Revendications

1. Procédé de fabrication d'un laser à corps solide et déclenchement passif, **caractérisé par** les étapes suivantes :
fabrication d'une première plaque de galette (62) à plans parallèles en un matériau à activité laser,
fabrication d'une deuxième plaque de galette (64) à plans parallèles en un matériau qui convient comme commutateur passif,
liaison de la première plaque de galette (62) et de la deuxième plaque de galette (64) pour former un bloc de galettes (70) et
division du bloc de galettes (70) en plusieurs lasers (44, 46) à corps solide et déclenchement passif au moyen d'une scie à fil qui comporte un fil "sans fin" ou un câble de fils "sans fin" entraîné et guidé par des galets.

2. Procédé selon la revendication 1, **caractérisé en ce que** les surfaces de contact (66, 68) de la première plaque de galette (62) et de la deuxième plaque de galette (64) sont nettoyées avant la liaison, en particulier à l'aide d'un mélange constitué d'acide sulfurique (H₂SO₄) et de peroxyde d'hydrogène (H₂O₂).

3. Procédé selon l'une des revendications 1 ou 2, **caractérisé en ce que** les surfaces de contact (66, 68) de la première plaque de galette (62) et de la deuxième plaque de galette (64) sont gravées avant la liaison.

4. Procédé selon l'une des revendications 1 à 3, **caractérisé en ce que** les surfaces de contact (66, 68) de la première plaque de galette (62) et de la deuxième plaque de galette (64) sont traitées et en particulier rendues hydrophiles avant la liaison à l'aide d'acide sulfurique (H₂SO₄) dilué, en particulier à un pH de valeur 1.

5. Procédé selon l'une des revendications 2 à 4, **caractérisé en ce que** les surfaces de contact (66, 68) de la première plaque de galette (62) et de la deuxième plaque de galette (64) sont rincées au moins une fois à l'eau ultrapure avant la liaison.

6. Procédé selon l'une des revendications précédentes, **caractérisé en ce qu'**un premier côté frontal du bloc de galettes (70) est revêtu d'un miroir de couplage (42).

7. Procédé selon l'une des revendications précédentes, **caractérisé en ce qu'**un deuxième côté frontal du bloc de galettes (70) est revêtu d'un miroir de découplage (48).

8. Procédé selon l'une des revendications précédentes, **caractérisé en ce que** plusieurs blocs de galettes (70) liés sont empilés les uns au-dessus des autres et **en ce que** ces blocs de galettes (70) sont ensuite divisés en plusieurs lasers (44, 46) à corps solide.

9. Procédé selon la revendication 8, **caractérisé en ce que** le premier et/ou le deuxième côté frontal des blocs de galettes (70) sont protégés par une couche de protection, notamment un film autocollant, avant d'être empilés les uns au-dessus des autres.

10. Procédé selon l'une des revendications précédentes, **caractérisé en ce que** le bloc de galettes (70) ou les blocs de galettes (70) empilés les uns au-dessus des autres sont divisés par plusieurs scies à fil disposées parallèlement les unes aux autres.

11. Procédé selon l'une des revendications précédentes, **caractérisé en ce que** les fils de sciage des scies à fil utilisent du diamant et en particulier une poudre de diamant comme agent de coupe.

12. Procédé selon l'une des revendications précédentes, **caractérisé en ce que** les fils de sciage des scies à fil utilisent du carbure de silicium comme agent de coupe.

13. Procédé selon l'une des revendications 11 ou 12, **caractérisé en ce que** les fils de sciage des scies à fil sont revêtus d'une boue avant la découpe et **en ce que** la boue contient l'agent de coupe, de préférence sous forme pulvérulente.

14. Procédé selon l'une des revendications 10 ou 11, **caractérisé en ce que** les fils de sciage des scies à fil sont revêtus de l'agent de coupe.
